# FASCICULE DE BREVET EUROPEEN

(11) **EP 3 718 325 B1**
(45) Date de publication et mention de la délivrance du brevet: **30.04.2025**
(21) Numéro de dépôt: 18819200.9
(22) Date de dépôt: 21.11.2018
(51) Int. Cl.: H04W 8/02

(54) **PROCÉDÉ ET DISPOSITIF DE GESTION DE PROFILS DE SERVICE D'UTILISATEURS**
VERFAHREN UND VORRICHTUNG ZUR VERWALTUNG VON BENUTZERDIENSTPROFILEN
METHOD AND DEVICE FOR MANAGING USER SERVICE PROFILES

(30) Priorité: 30.11.2017 FR 1761436
(43) Date de publication de la demande: 07.10.2020
(73) Titulaire: Orange, 92130 Issy-les-Moulineaux (FR)
(72) Inventeur: BOUVET, Bertrand, 92326 Châtillon Cedex (FR)
(74) Mandataire: Cabinet Beau de Loménie
(86) Numéro de dépôt international: PCT/FR2018/052944
(87) Numéro de publication internationale: WO 2019/106261

(56) Documents cités:
- EP-A1- 0 983 699
- EP-A2- 1 730 883
- EP-B1- 1 730 883
- WO-A1-2016/180865
- WO-A1-2016/186684
- WO-A1-2017/098324
- CN-A- 104 113 536
- US-A1- 2013 095 828
- "3rd Generation Partnership Project; Technical Specification Group Services and System Aspects; Customised Applications for Mobile network Enhanced Logic (CAMEL); Service description; Stage 1 (Release 12)", 3 October 2014 (2014-10-03), XP050916336, Retrieved from the Internet <URL:http://www.3gpp.org/ftp/Specs/zItuInfo/M.2012-2/2014-12/Rel-12/22_series/> [retrieved on 20141003]

## Description

### Arrière plan de l'invention

L'invention se situe dans le contexte des réseaux de télécommunications et plus précisément dans le contexte de la fourniture de services Réseau Intelligent (RI) aux utilisateurs en situation d'itinérance (en anglais « roaming »).

On rappelle que les services RI, ou encore, services RI, sont des services personnalisés d'un opérateur qui s'appliquent à des appels dont la signalisation est normalisée.

On distingue généralement ces services de réseau RI des services MMTel (Multimedia Telephony), solution standardisée du 3GPP pour fournir des services de téléphonie vocale, vidéo et autres sur les réseaux cellulaires 2G/3G/4G/5G.

A ce jour, les conditions dans lesquelles l'opérateur d'un réseau nominal permet à ses clients itinérants dans un réseau visité de bénéficier des services RI dont il bénéficie naturellement dans son réseau nominal dépendent d'un éventuel accord entre l'opérateur du réseau nominal et l'opérateur du réseau visité.

Lorsqu'un tel accord n'a pas été établi, un utilisateur itinérant dans un réseau visité souhaitant bénéficier dans ce réseau d'un service RI peut par exemple utiliser les mécanismes des codes USSD (Unstructured Supplementary Service Data), (chaînes de caractères qui commencent par * ou #, comportent des codes de services numériques puis qui se terminent par #).

Ce mécanisme de code USSD permet en particulier à un utilisateur itinérant en mode prépayé de générer un appel sortant depuis le réseau visité, même en l'absence d'accord RI CAMEL (Customized Application for Mobile network Enhanced Logic) entre l'opérateur du réseau nominal et l'opérateur du réseau visité. Par exemple, un utilisateur en mode prépayé et en situation d'itinérance à l'étranger peut composer le code de service USSD *1234#33296073859# pour être mis en relation téléphonique avec le N° 33296073859 en France. Ainsi, si la balance du compte prépayé de l'utilisateur est positive, le réseau nominal génère lui-même un appel téléphonique vers cet utilisateur en situation d'itinérance à l'étranger puis, une fois ce premier appel établi, le réseau nominal initie un appel supervisé par le service RI prépayé vers le numéro composé 33296073859 puis « aboute » ces 2 appels.

Cette solution n'est pas satisfaisante car elle impose à l'utilisateur de connaître le code USSD correspondant au service d'appel sortant depuis un réseau visité sans accord de RI. D'autre part, selon les fabricants de terminaux, le contenu du journal d'appel du terminal peut être erroné du fait que cet appel peut être ajouté au journal d'appel entrant alors qu'il s'agit d'un appel sortant.

L'invention vise une solution permettant à un opérateur d'offrir certains services RI à ses utilisateurs en situation d'itinérance sans accord préalable de réseau intelligent avec l'opérateur du réseau visité et qui ne présente pas les inconvénients de la solution précitée. EP 1 730 883 A2 (ROAMWARE INC [US]) 13 décembre 2006 (2006-12-13), est une méthode permettant d'implémenter de l'itinérance pour les service wo-wifi dans laquelle un H-HLR alloue un numéro local aux utilisateurs en situation d'itinérance, ainsi qu un transfert d'appel vers ce nouveau numéro;

"3rd Generation Partnership Project; Technical Specification Group Services and System Aspects; Customised Applications for Mobile network Enhanced Logic (CAMEL); Service description; Stage 1 (Release 12)",, 3 octobre 2014 (2014-10-03) détail plusieurs configuration d'itinérance pour les services CAMEL, ou il est indiqué que le HPLMN adapte le profil de services de l'utilisateur en fonction des capacité du VPLMN;

### Objet et résumé de l'invention

Ainsi, et selon un premier aspect, l'invention vise un procédé de gestion de profils de service d'utilisateurs mis en œuvre par une entité de gestion de profils de services d'utilisateurs dans un réseau nominal.

Ce procédé est mis en œuvre par l'entité de gestion de profils de services d'utilisateurs avant d'envoyer, à une entité tierce, le profil de services d'un utilisateur. Il comporte :
- une étape pour déterminer si l'entité tierce se trouve dans le réseau nominal ou dans un réseau visité;
- si l'entité tierce se trouve dans un réseau visité, une étape pour déterminer, à partir du profil de services de l'utilisateur enregistré dans l'entité de gestion de profils, si l'utilisateur a au moins une marque associée à un service Originating d'un RI ;
- si l'utilisateur a au moins une marque associée à un service Originating d'un RI, une étape de contrôle pour déterminer s'il existe un accord de réseau intelligent entre un opérateur du réseau nominal et un opérateur du réseau visité et si cet accord existe, la nature de cet accord ;
- une étape d'envoi, à l'entité tierce, d'un profil de services de l'utilisateur déterminé en fonction d'un type de ce service Originating d'un RI et du résultat de cette étape de contrôle.

On rappelle qu'un service Originating d'un RI (en français «service appelant d'un RI ») désigne notamment l'interception de tout ou partie des messages de signalisation d'une session émise par un terminal par le commutateur du réseau nominal ou du réseau visité ayant pris en charge le terminal lors de sa procédure d'attachement au réseau pour la transmettre partiellement ou en globalité après adaptation protocolaire vers une entité de traitement de service RI localisée dans le réseau nominal de l'utilisateur et qui se charge d'appliquer une logique de service spécifique avant de redonner le contrôle au commutateur sur cette session.

On rappelle qu'une marque de service de RI définit l'ensemble des paramètres de déclenchement de ce RI, dont (i) l'adresse de la plateforme gsm-SCF (Global System Mobile - Service Control Function) de traitement de la logique de service et (ii) la clé de service (en anglais « Service Key ») identifiant la logique de service qui doit être invoquée dans cette plateforme et (iii) TDP (Trigger Detection Point) list identifiant le point de détection de l'automate d'appel BCSM (Basic Call State Machine) sur lequel le déclenchement du service RI doit intervenir et (iiii) le Default Call Handling qui indique si l'appel doit être poursuivi ou libéré dans le cas d'une erreur lors d'un dialogue entre le gsm-SSF et le gsm-SCF.

Corrélativement, l'invention vise une entité de gestion des profils de services d'utilisateurs dans un réseau nominal. Cette entité comporte :
- une unité pour déterminer si une entité tierce à laquelle elle envisage d'envoyer un profil d'un utilisateur, se trouve dans un réseau visité;
- une unité pour déterminer, si l'entité tierce se trouve dans un réseau visité, et à partir du profil de services de l'utilisateur enregistré dans une base de données gérée par l'entité de gestion des profils de services, si cet utilisateur a au moins une marque associée à un service Originating d'un RI ;
- une unité de contrôle configurée pour déterminer s'il existe un accord de réseau intelligent entre un opérateur du réseau nominal et un opérateur du réseau visité et le cas échéant la nature de cet accord ;
- une unité d'envoi, à l'entité tierce, d'un profil de services de l'utilisateur déterminé en fonction d'un type du service Originating d'un RI et du résultat de la détermination précitée effectuée par l'unité de contrôle.

L'invention peut notamment être mise en œuvre par une entité de type HLR (Home Location Register), HSS (Home Subscriber Server) ou SDM (Service Data Management).

Au sens de l'invention, l'entité tierce peut notamment être constituée par un commutateur VMSC (Visited Mobile Switch Center), un serveur TAS (Telephony Application Server) ou une plateforme SCP (Service Control Platform) ou une plate-forme USSD Gateway.

Ainsi, et d'une façon générale, l'invention permet à l'entité de gestion des profils de services d'utilisateurs selon l'invention, c'est-à-dire par exemple à une entité HLR, HSS ou SDM de générer un profil dynamiquement, selon notamment que l'entité tierce à qui ce profil doit être envoyé se trouve dans le réseau nominal ou dans un réseau visité. Par conséquent, deux entités qui demandent successivement le profil d'un même utilisateur à l'entité de gestion de profils de services selon l'invention peuvent se voir délivrer des profils différents.

En effet, dans un mode de réalisation de l'invention, le procédé est mis en œuvre lorsque l'entité de gestion des profils de service d'utilisateurs selon l'invention reçoit une requête de l'entité tierce pour télécharger un profil de services de l'utilisateur.

En variante, ou de façon complémentaire, le procédé peut être mis en œuvre lorsque l'entité de gestion des profils d'utilisateurs selon l'invention détecte un changement dans le profil de services de l'utilisateur enregistré dans sa base de données.

Dans un mode particulier de réalisation de l'invention, l'étape pour déterminer si l'entité tierce se trouve dans un réseau visité est effectuée à partir d'une adresse de routage internationale de l'entité tierce.

Cette adresse internationale de routage peut par exemple notamment être constituée par une adresse réseau globale connue de l'homme du métier des réseaux sous le terme « Global Title ». Cette adresse internationale peut notamment être :
- un numéro conforme à la norme E164 utilisé dans le cadre du protocole MAP (Mobile Application Protocol) par exemple pour les échanges entre le serveur VMSC ou TAS ou SCP ou USSD Gateway et le HLR ou SDM ; ou
- une adresse nom de domaine/adresse IP utilisée dans le cadre du protocole DIAMETER, par exemple pour les échanges entre le TAS et le HSS ou SDM.

Conformément à l'invention, lorsque l'utilisateur a au moins une marque de service Originating d'un RI, et lorsque l'entité tierce se trouve dans un réseau visité, le profil de services de l'utilisateur envoyé à l'entité tierce est déterminé en fonction de l'existence et de la nature d'un accord entre l'opérateur du réseau nominal et l'accord du réseau visité. Cet accord de RI peut notamment être un accord de type CAMEL.

L'invention peut être utilisée par l'opérateur d'un réseau nominal, pour offrir à un utilisateur attaché à un réseau visité qui ne bénéficie pas d'accord avec ce réseau nominal, un service équivalent au service offert à cet utilisateur sur le réseau nominal.

Par exemple, l'invention peut être utilisée par l'opérateur d'un réseau nominal pour permettre aux utilisateurs de lancer un appel en VoWIFI (Voice over WiFi) lorsque ceux-ci sont attachés en cellulaire à un réseau visité, même si ces utilisateurs bénéficient d'un abonnement de type prépayé, même s'il n'existe pas d'accord à cet effet entre l'opérateurs du réseau nominal et l'opérateur du réseau visité.

Dans un mode particulier de réalisation, les différentes étapes du procédé de gestion de profils d'utilisateurs selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé de gestion des profils d'utilisateurs selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente de façon schématique une entité de gestion de profils de services d'utilisateurs conforme à un mode particulier de réalisation de l'invention ;
- la figure 2 illustre l'architecture matérielle d'une entité de gestion de profils de services d'utilisateurs conforme à un mode particulier de réalisation de l'invention ;
- la figure 3 représente sous forme d'organigramme, les principales étapes d'un procédé de gestion des profils d'utilisateurs conforme à un mode particulier de réalisation de l'invention ; et
- la figure 4 illustre de façon schématique le traitement d'un appel VoWiFi conformément à l'état de la technique.

### Description détaillée d'un mode de réalisation de l'invention

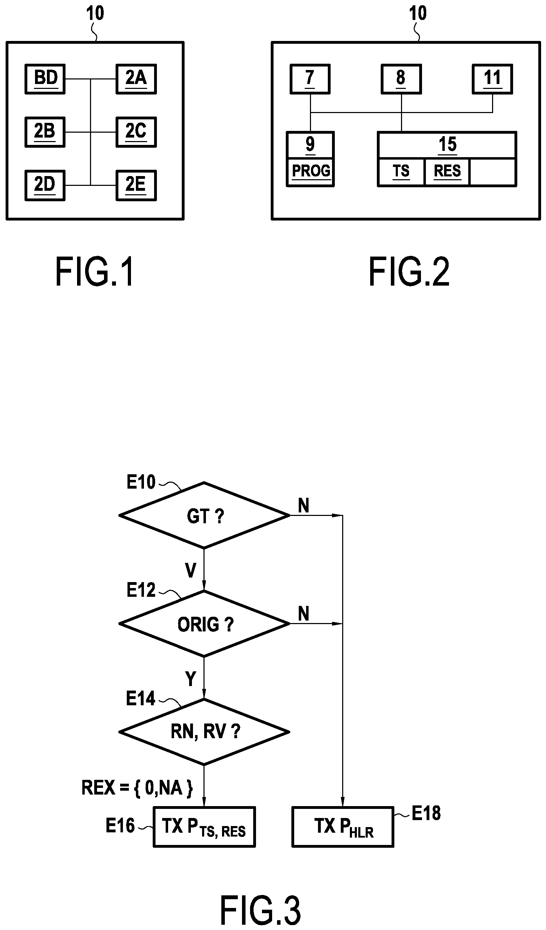

La figure 1 représente une entité 10 de gestion de profils de services d'utilisateurs. Cette entité 10 peut par exemple être constituée par un HLR, un HSS ou un SDM. De façon connue, cette entité comporte une base de données BD dans laquelle sont enregistrés les profils P_{HLR} de services d'utilisateurs.

Dans le premier mode de réalisation décrit ici, l'entité 10 de gestion de profils d'utilisateurs a l'architecture d'un ordinateur, telle qu'illustrée à la figure 2. Elle comprend notamment un processeur 7, une mémoire vive 8, une mémoire morte 9, une mémoire flash non volatile 15 ainsi que des moyens de communication 11. De tels moyens sont connus en soi et ne sont pas décrits plus en détail ici.

La mémoire morte 9 du dispositif de l'entité 10 de gestion de profils d'utilisateurs constitue un support d'enregistrement conforme à l'invention, lisible par le processeur 7 et sur lequel est enregistré ici un programme d'ordinateur PROG conforme à l'invention.

Le programme d'ordinateur PROG définit des modules fonctionnels et logiciels ici, configurés pour mettre en œuvre les étapes d'un procédé de gestion de profils de service d'utilisateurs. Ces modules fonctionnels s'appuient sur et/ou commandent les éléments matériels 7-11 de l'entité 10 cités précédemment. Ils comprennent notamment ici, comme illustré sur la figure 1 :
- une unité 2A pour déterminer si une entité tierce à laquelle elle envisage d'envoyer un profil d'un dit utilisateur, se trouve dans un réseau visité ou dans le réseau nominal, par exemple à partir d'une adresse de routage internationale de ladite entité tierce.
- une unité 2B pour déterminer si un utilisateur a au moins une marque associée à un service Originating d'un RI, à partir du profil de services de l'utilisateur enregistré dans la base de données BD ;
- une unité 2C de contrôle configurée pour déterminer s'il existe un accord de réseau intelligent entre un opérateur dudit réseau nominal et un opérateur dudit réseau visité et le cas échéant la nature dudit accord, par exemple un accord CAMEL ;
- une unité d'envoi 2D configurée pour envoyer à une entité tierce un profil de services de l'utilisateur déterminé en fonction d'un type du service Originating et du résultat de la détermination effectuée par l'unité de contrôle 2C ; et
- une unité 2E configurée pour détecter un changement dans le profil de services de l'utilisateur enregistré dans sa dite base de données.

Les moyens de communication 11 sont notamment configurés pour recevoir une requête de l'entité tierce pour télécharger un profil de services de l'utilisateur.

En référence à la figure 3, nous allons maintenant décrire les principales étapes d'un procédé de gestion de profils de service d'utilisateurs dans un mode particulier de réalisation de l'invention.

Dans l'exemple de réalisation décrit ici, ce procédé est mis en œuvre par une entité de gestion des profils de services d'utilisateurs HLR dans un réseau nominal, du type de l'entité 10 précédemment décrite, lorsque celle-ci envisage d'envoyer un profil de services d'un utilisateur à une entité tierce ET, soit sur requête de l'entité tierce ET, soit spontanément, c'est-à-dire en mode « PUSH » lorsque l'entité HLR a détecté un changement dans le profil de services P_{HLR} de cet utilisateur enregistré dans la base de données BD.

Ce procédé comporte une étape E10 au cours de laquelle le HLR 10 détermine si l'entité tierce ET se trouve dans le réseau nominal RN ou dans un réseau visité RV.

Dans le mode de réalisation décrit ici, cette étape E10 de détermination est effectuée en analysant l'adresse de routage internationale de l'entité tierce. Dans le mode de réalisation décrit ici, cette adresse est de type Global Title. Cette analyse peut notamment être effectuée en comparant un préfixe de l'adresse E164 avec une table comportant des préfixes en relation avec des localisations de réseaux.

S'il est déterminé à l'étape E10 que l'entité tierce ET se trouve dans un réseau visité RV (résultat du test E10 = « V »), l'étape E10 est suivie par une étape E12 au cours de laquelle l'entité HLR détermine, à partir du profil de services de l'utilisateur P_{HLR} enregistré dans sa base de données BD, si cet utilisateur a au moins une marque associée à un service Originating d'un RI. Si une telle marque existe, on appelle TS le type de ce service. Ce type est mémorisé dans un registre de la mémoire 15.

S'il est déterminé à l'étape E12 que l'utilisateur a au moins une marque de service Originating d'un RI, l'étape E12 est suivie par une étape E14 de contrôle au cours de laquelle l'entité HLR détermine s'il existe un accord de réseau intelligent entre un opérateur du réseau nominal RN et un opérateur du réseau visité RV, et le cas échéant la nature de cet accord.

Dans le mode de réalisation décrit ici, le résultat de l'étape E14 de contrôle est mémorisé dans une variable RES de la mémoire 15, dont la valeur est 0 s'il n'existe pas d'accord entre l'opérateur du réseau nominal RN et l'opérateur du réseau visité RV ou une valeur NA non nulle représentative de la nature de cet accord si cet accord existe.

Au cours d'une étape E16, l'entité HLR envoie, à l'entité tierce, un profil de services P_{TS}, _{RES} de l'utilisateur déterminé dynamiquement en fonction du type TS du service Originating d'un RI et du résultat RES de l'étape E14 de contrôle.

Dans le mode de réalisation décrit ici, s'il est déterminé à l'étape E10 que l'entité tierce se trouve dans le réseau nominal (résultat du test E10 = « N ») ou s'il est déterminé à l'étape E12 que l'utilisateur n'a pas de marque de service Originating d'un RI, l'entité HLR envoie le profil P_{HLR} à l'entité tierce TE au cours d'une étape E18.

### Exemple de problème résolu par l'invention

Nous allons maintenant décrire comment l'invention peut être utilisée par l'opérateur d'un réseau nominal pour permettre aux utilisateurs de lancer un appel en VoWIFI (Voice over WiFi) lorsque ceux-ci sont attachés en cellulaire à un réseau visité, même si ces utilisateurs bénéficient d'un abonnement de type prépayé, dès lors qu'il existe un accord à cet effet entre l'opérateur du réseau nominal et l'opérateur du réseau visité.

On rappelle que le mode prépayé (en anglais Pre-Paid) demande systématiquement l'utilisation du service RI CAMEL.

Par conséquent, lorsqu'un utilisateur bénéficie d'un abonnement prépayé, son profil de services utilisateur P_{HLR}, tel qu'enregistré dans la base de données gérée par l'entité HLR du réseau nominal comporte, outre des marques de services téléphoniques classiques, des marques de déclenchement de services Originating O-CSI (Originating Camel Subscription Information) et éventuellement des marques de déclenchement de services Terminating T-CSI (Terminating Camel Subscription Information) d'un réseau intelligent.

Lorsqu'un tel utilisateur se retrouve sous couverture cellulaire 2G/3G/4G d'un réseau visité, le commutateur VMSC de ce réseau visité (Visited Mobile Switch Center), après attachement du terminal au réseau, demande le téléchargement du profil de services du client en interrogeant l'entité HLR du réseau nominal.

Sur réception de cette demande, l'entité HLR du réseau nominal vérifie s'il existe un accord d'itinérance avec support de services RI CAMEL avec l'opérateur du réseau visité sur la base des identifiants MNC (Mobile Network Code) et MCC (Mobile Country Code) et/ou d'adresse GT transmis dans le protocole MAP (Mobile Application Part) utilisé entre le VMSC et le HLR.

S'il n'existe pas d'accord de réseau intelligent entre l'opérateur du réseau nominal et l'opérateur du réseau visité, alors :
- l'entité HLR du réseau nominal active le service MMTel Outgoing Call Barring avant de retourner le profil de services du client au VMSC de sorte à interdire tout appel sortant ; et
- l'entité HLR du réseau nominal ne remonte pas les marques de déclenchement de services Originating O-CSI au commutateur VMSC du réseau visité. Le profil de services retourné par le HLR au V-MSC indique explicitement au VMSC que ce client n'a pas le droit de passer des appels sortants et que le VMSC doit bloquer/interdire toute tentative d'appel sortant de l'appelant.

Dans ces conditions, si l'utilisateur tente de faire un appel sortant via le réseau cellulaire 2G/3G/4G, le commutateur VMSC diffuse un message vocal informant l'utilisateur de l'impossibilité de passer des appels sortants et peut lui proposer d'utiliser un code USSD pour passer des appels sortants.

Nous supposons maintenant que l'utilisateur, tout en restant attaché au réseau cellulaire 2G/3G/4G du réseau visité, décide de faire un appel en VoWiFi.

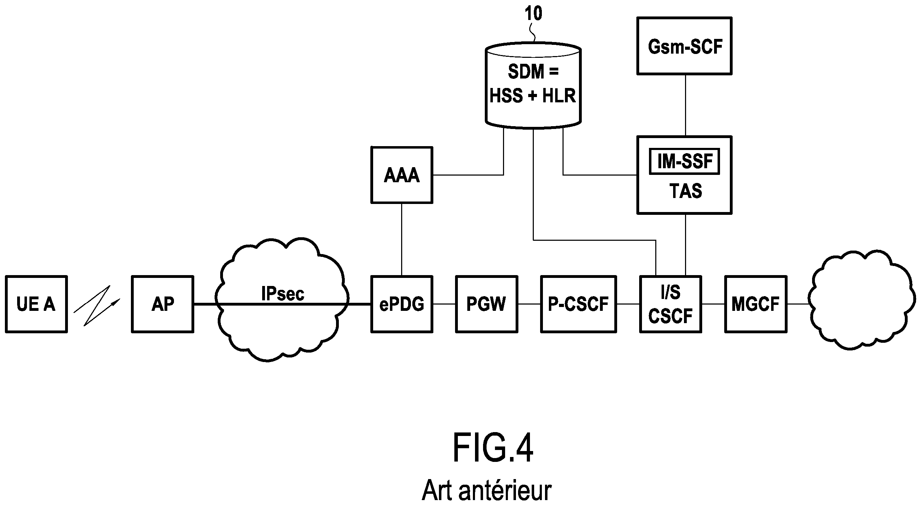

De façon connue et comme représenté à la figure 4, le terminal UE A se connecte au travers de n'importe quel point d'accès WiFi AP (Access Point) à une entité ePDG (enhanced Packet Data Gateway), point d'entrée du réseau nominal, via un canal IPsec établi entre le terminal UE et cette entité ePDG.

Cette entité ePDG est connectée à un serveur AAA (Authentification, Authorization , Accounting), qui est lui-même connecté à l'entité HLR/HSS 10 de gestion des profils de service utilisateur dans le réseau nominal et au cœur de réseau IMS via un équipement PGW.

Après vérification des identifiants (en anglais « credentials ») liés notamment à l'authentification et au cryptage par le serveur AAA et par le serveur HLR/HSS, le terminal UE A envoie un message SIP REGISTER qui arrive au S-CSCF dans le cœur de réseau IMS nominal et remonte via la procédure de Third Party Registration jusqu'à un serveur TAS (Telephony Application Server).

Le serveur TAS télécharge le profil de services du client auprès du HLR/HSS 10.

Sans la mise en œuvre de l'invention, ce profil est identique à celui précédemment téléchargé dans le réseau visité par le commutateur VMSC du réseau cellulaire 2G/3G/4G auquel est attaché le terminal.

Comme établi ci-dessus, du fait de l'absence d'accord de réseau intelligent entre l'opérateur du réseau nominal et l'opérateur du réseau visité, le champ Outgoing Call Barring est positionné dans le profil de services de l'utilisateur de sorte à empêcher l'utilisateur de faire des appels sortants de manière standard depuis le réseau visité.

Ceci a pour effet d'activer également et de la même façon le service Outgoing Call Barring dans le serveur TAS. Les appels sortants sont donc également interdits pour cet utilisateur, même en VoWiFi. Concrètement, lorsque le terminal de l'utilisateur envoie un message SIP INVITE pour générer un appel sortant, le serveur TAS refuse de passer l'appel et répond par exemple à ce message SIP INVITE par un message 403 Forbidden.

On note que si l'utilisateur avait configuré son terminal en mode dit « avion » (modes cellulaires 2G, 3G, 4G désactivés, mode WiFi activé), l'appel VoWiFi aurait pu être passé; en effet, si le terminal n'est pas attaché en cellulaire au réseau visité, le service Outgoing Call Barring est désactivé dans le profil de services de l'utilisateur géré par l'entité HLR/HSS du réseau nominal.

Le procédé et l'entité HLR/HSS 10 selon l'invention permettent notamment de résoudre ce problème. En effet, lorsque le serveur TAS demande le téléchargement du profil de services de l'utilisateur, l'entité HLR/HSS détecte, à l'étape E10 que cette demande vient d'une entité tierce du réseau nominal et autorise les appels sortant en envoyant au serveur TAS un profil dans lequel le service MMtel Outgoing Call Barring est désactivé, même si le terminal est attaché en cellulaire 2G/3G/4G dans le réseau visité.

### Autre exemple de mise en œuvre de l'invention

L'invention peut aussi être utilisée par exemple pour la mise en œuvre du service Originating d'un RI « Wrong Number Correction ».

On rappelle que ce service activé uniquement lorsque l'utilisateur est localisé dans un réseau visité, consiste à compléter ou adapter le numéro appelé si l'utilisateur compose un numéro qui n'est pas interprétable par le réseau visité, typiquement lorsque l'utilisateur applique par simple habitude les mêmes règles de numérotation qu'il utilise couramment dans son pays nominal.

S'il existe un accord d'itinérance avec l'opérateur du réseau visité avec support des services RI, le service Originating d'un RI Wrong Number Correction permet par exemple pour le cas d'un appel vers la France depuis un pays visité de remplacer automatiquement le numéro composé par l'utilisateur 0ZABPQMCDU par 0033ZABPQMCDU ou +33ZABPQMCDU.

Dans l'état actuel de la technique, s'il n'existe pas d'accord de service Originating d'un RI avec l'opérateur du réseau visité, le client, sous couverture cellulaire 2G/3G/4G, ne peut pas bénéficier de ce service.

En revanche, lorsque l'utilisateur initie un appel en VoWiFi depuis n'importe où dans le monde, le terminal est localisé comme s'il était dans le réseau nominal, puisque l'entité ePDG et l'entité cœur IMS avec le TAS sont toujours dans le réseau nominal. De ce fait, il n'est pas utile de déclencher ce service Originating d'un RI.

L'invention peut donc être utilisée pour éviter de déclencher le service Originating d'un RI Wrong Number Correction lorsque l'entité HLR/HSS reçoit une demande de téléchargement de profil depuis une entité du réseau nominal, en l'occurrence depuis un serveur TAS.

## Revendications

1. Procédé de gestion de profils de service d'utilisateurs mis en œuvre par une entité, HLR/HSS/SDM, de gestion des profils de services d'utilisateurs dans un réseau nominal d'un utilisateur, ledit procédé étant mis en œuvre lorsque ledit utilisateur, rattaché en cellulaire à un réseau visité, lance un appel en VoWifi via son réseau nominal, ledit procédé comportant: une étape de réception d'une demande d'un profil de services de l'utilisateur de la part d'une entité de son réseau nominal, serveur TAS;
- une étape de génération du profil de services de l'utilisateur pour l'entité de son réseau nominal ;
- une étape (E16) d'envoi, à l'entité de son réseau nominal, du profil de services de l'utilisateur généré ;
ledit profil de services de l'utilisateur généré pour l'entité du réseau nominal pouvant être distinct d'un profil de services de l'utilisateur précédemment généré et envoyé à une entité du réseau visité, VMSC, auquel l'utilisateur est rattaché en cellulaire, en fonction de l'existence ou non d'un accord de réseau intelligent entre ledit réseau visité et ledit réseau nominal, et si un tel accord existe, de la nature de cet accord.

2. Procédé selon la revendication 1 dans lequel ladite nature de l'accord comprend le support ou non d'un service de réseau intelligent CAMEL, Customized Application for Mobile network Enhanced Logic.

3. Procédé selon la revendication 1 ou 2 dans lequel un accord de réseau intelligent entre ledit réseau visité et ledit réseau nominal est inexistant, et ledit profil de services de l'utilisateur généré pour ladite entité du réseau nominal est distinct du profil de services de l'utilisateur précédemment généré pour ladite entité du réseau visité.

4. Procédé selon la revendication 3 dans lequel le profil de services de l'utilisateur généré pour l'entité du réseau nominal autorise des appels sortant dudit utilisateur et le profil de services de l'utilisateur généré pour l'entité du réseau visité interdit lesdits appels sortants.

5. Procédé selon l'une quelconque des revendications 1 à 4, ledit procédé étant mis en œuvre sur réception d'une requête de ladite entité du réseau nominal pour télécharger un profil de services de l'utilisateur.

6. Procédé selon l'une quelconque des revendications 1 à 5, ledit procédé étant mis en œuvre sur détection d'un changement dans ledit profil de services de l'utilisateur enregistré dans l'entité de gestion des profils.

7. Entité, HLR/HSS/SDM, de gestion des profils de services d'utilisateurs dans un réseau nominal d'un utilisateur, **caractérisée en ce qu'**elle comporte :
- une unité (2D) de réception configurée pour recevoir une requête d'une entité du réseau nominal, serveur TAS, pour télécharger un profil de services de l'utilisateur, ledit utilisateur étant attaché en cellulaire à un réseau visité, et ayant lancé un appel en VoWifi via ledit réseau nominal ;
- une unité de génération (2C, 2D) du profil de service de l'utilisateur pour ladite entité du réseau nominal ; et
- une unité (2D) d'envoi, à ladite entité du réseau nominal, du profil de services de l'utilisateur généré ;
ledit profil de services de l'utilisateur généré pour l'entité du réseau nominal pouvant être distinct d'un profil de services de l'utilisateur précédemment généré et envoyé par ladite entité de gestion des profils à une entité du réseau visité, VMSC, en fonction de l'existence ou
non d'un accord de réseau intelligent entre ledit réseau visité et ledit réseau nominal, et si un tel accord existe, de la nature de cet accord.

8. Entité de gestion de profils selon la revendication 8, **caractérisée en ce qu'**elle comporte une unité (2E) configurée pour détecter un changement dans ledit profil de services de l'utilisateur enregistré dans sa dite base de données.

9. Entité de gestion de profils selon la revendication 7 ou 8 **caractérisé en ce que** ladite unité (2A) pour déterminer si ladite entité tierce se trouve dans un réseau visité est configurée pour effectuer cette détermination à partir d'une adresse de routage internationale de ladite entité tierce.

10. Programme d'ordinateur (PROG) comportant des instructions pour l'exécution des étapes d'un procédé de gestion de profils de service d'utilisateurs selon l'une quelconque des revendications 1 à 6 lorsque ledit programme est exécuté par une entité de gestion de profil HLR/HSS/SDM.

11. Support d'enregistrement lisible par une entité de gestion de profil HLR/HSS/ SDM sur lequel est enregistré un programme d'ordinateur comprenant des instructions pour l'exécution des étapes du procédé de gestion de profils de service d'utilisateurs selon l'une quelconque des revendications 1 à 6.

## Patentansprüche

1. Verfahren zur Verwaltung von Dienstprofilen von Benutzern, das von einer Einrichtung, HLR/HSS/SDM, zur Verwaltung der Dienstprofile von Benutzern in einem Heimatnetz eines Benutzers ausgeführt wird, wobei das Verfahren ausgeführt wird, wenn der über ein Mobilfunknetz mit einem besuchten Netz verbundene Benutzer einen VoWifi-Anruf über sein Heimatnetz einleitet, wobei das Verfahren umfasst: einen Schritt des Empfangens einer Anforderung eines Dienstprofils des Benutzers seitens einer Einrichtung seines Heimatnetzes, TAS-Server;
- einen Schritt des Erzeugens des Dienstprofils des Benutzers für die Einrichtung seines Heimatnetzes;
- einen Schritt (E16) des Sendens, an die Einrichtung seines Heimatnetzes, des erzeugten Dienstprofils des Benutzers;
wobei das für die Einrichtung des Heimatnetzes erzeugte Dienstprofil des Benutzers verschieden von einem Dienstprofil des Benutzers sein kann, das zuvor erzeugt und an eine Einrichtung des besuchten Netzes, VMSC, gesendet wurde, mit dem der Benutzer über ein Mobilfunknetz verbunden ist, in Abhängigkeit von dem Vorliegen oder Nichtvorliegen einer Vereinbarung für ein intelligentes Netz zwischen dem besuchten Netz und dem Heimatnetz und, wenn eine solche Vereinbarung vorliegt, von der Art dieser Vereinbarung.

2. Verfahren nach Anspruch 1, wobei die Art der Vereinbarung die Unterstützung oder Nichtunterstützung eines Dienstes eines intelligenten Netzes CAMEL, Customized Application for Mobile network Enhanced Logic, umfasst.

3. Verfahren nach Anspruch 1 oder 2, wobei eine Vereinbarung für ein intelligentes Netz zwischen dem besuchten Netz und dem Heimatnetz nicht vorliegt und das für die Einrichtung des Heimatnetzes erzeugte Dienstprofil des Benutzers von dem zuvor für die Einrichtung des besuchten Netzes erzeugten Dienstprofil des Benutzers verschieden ist.

4. Verfahren nach Anspruch 3, wobei das für die Einrichtung des Heimatnetzes erzeugte Dienstprofil des Benutzers abgehende Anrufe des Benutzers zulässt und das für die Einrichtung des besuchten Netzes erzeugte Dienstprofil des Benutzers die abgehenden Anrufe untersagt.

5. Verfahren nach einem der Ansprüche 1 bis 4, wobei das Verfahren beim Empfangen einer Anfrage der Einrichtung des Heimatnetzes zum Herunterladen eines Dienstprofils des Benutzers ausgeführt wird.

6. Verfahren nach einem der Ansprüche 1 bis 5, wobei das Verfahren bei Erkennung einer Änderung in dem Dienstprofil des Benutzers ausgeführt wird, das in der Einrichtung zur Verwaltung der Profile gespeichert ist.

7. Einrichtung, HLR/HSS/SDM, zur Verwaltung der Benutzerdienstprofile in einem Heimatnetz eines Benutzers, **dadurch gekennzeichnet, dass** sie beinhaltet:
- eine Empfangseinheit (2D), die dazu ausgestaltet ist, eine Anfrage einer Einrichtung des Heimatnetzes, TAS-Server, zum Herunterladen eines Dienstprofils des Benutzers zu empfangen, wobei der Benutzer über ein Mobilfunknetz mit einem besuchten Netz verbunden ist und einen VoWifi-Anruf über das Heimatnetz eingeleitet hat;
- eine Einheit (2C, 2D) zur Erzeugung des Dienstprofils des Benutzers für die Einrichtung des Heimatnetzes; und
- eine Einheit (2D) zum Senden, an die Einrichtung des Heimatnetzes, des erzeugten Dienstprofils des Benutzers; wobei das für die Einrichtung des Heimatnetzes erzeugte Dienstprofil des Benutzers verschieden von einem Dienstprofil des Benutzers sein kann, das von der Einrichtung zur Verwaltung der Profile zuvor erzeugt und an eine Einrichtung des besuchten Netzes, VMSC, gesendet wurde, in Abhängigkeit von dem Vorliegen oder Nichtvorliegen einer Vereinbarung für ein intelligentes Netz zwischen dem besuchten Netz und dem Heimatnetz und, wenn eine solche Vereinbarung vorliegt, von der Art dieser Vereinbarung.

8. Einrichtung zur Verwaltung von Profilen nach Anspruch 8, **dadurch gekennzeichnet, dass** sie eine Einheit (2E) beinhaltet, die dazu ausgestaltet ist, eine Änderung in dem Dienstprofil des Benutzers zu erkennen, das in ihrer Datenbank gespeichert ist.

9. Einrichtung zur Verwaltung von Profilen nach Anspruch 7 oder 8, **dadurch gekennzeichnet, dass** die Einheit (2A), um zu bestimmen, ob die dritte Einrichtung sich in einem besuchten Netz befindet, dazu ausgestaltet ist, diese Bestimmung ausgehend von einer internationalen Routingadresse der dritten Einrichtung durchzuführen.

10. Computerprogramm (PROG), das Anweisungen beinhaltet, die bei der Ausführung des Programms durch eine Einrichtung zur Profilverwaltung HLR/HSS/SDM die Schritte des Verfahrens zur Verwaltung von Dienstprofilen von Benutzern nach einem der Ansprüche 1 bis 6 ausführen.

11. Speichermedium, das von einer Einrichtung zur Profilverwaltung HLR/HSS/SDM gelesen werden kann und auf dem ein Computerprogramm gespeichert ist, das Anweisungen zur Ausführung der Schritte des Verfahrens zur Verwaltung von Dienstprofilen von Benutzern nach einem der Ansprüche 1 bis 6 umfasst.

## Claims

1. Method for managing user service profiles implemented by an HLR/HSS/SDM entity for managing the user service profiles in a home network of a user, said method being implemented when said user, connected over cellular to a visited network, initiates a VoWiFi call via their home network, said method comprising: a step of receiving a request for a service profile of the user from an entity of its home network, TAS server;
- a step of generating the service profile of the user for the entity of their home network;
- a step (E16) of sending the generated service profile of the user to the entity of their home network; said service profile of the user generated for the entity of the home network being able to be distinct from a service profile of the user previously generated and sent to a VMSC entity of the visited network to which the user is connected over cellular, depending on whether or not an intelligent network agreement exists between said visited network and said home network and, if such an agreement exists, on the nature of this agreement.

2. Method according to Claim 1, wherein said nature of the agreement comprises whether or not a customized application for mobile network enhanced logic, CAMEL, intelligent network service is supported.

3. Method according to Claim 1 or 2, wherein an intelligent network agreement between said visited network and said home network is non-existent, and said service profile of the user generated for said entity of the home network is distinct from the service profile of the user previously generated for said entity of the visited network.

4. Method according to Claim 3, wherein the service profile of the user generated for the entity of the home network authorizes outgoing calls of said user and the service profile of the user generated for the entity of the visited network prohibits said outgoing calls.

5. Method according to any one of Claims 1 to 4, said method being implemented upon receipt of a request from said entity of the home network to download a service profile of the user.

6. Method according to any one of Claims 1 to 5, said method being implemented upon detection of a change in said service profile of the user stored in the entity for managing the profiles.

7. HLR/HSS/SDM entity for managing the user service profiles in a home network of a user, **characterized in that** it comprises:
- a receiving unit (2D) configured to receive a request from an entity of the home network, TAS server, to download a service profile of the user, said user being connected over cellular to a visited network, and having initiated a VoWiFi call via said home network;
- a unit (2C, 2D) for generating the service profile of the user for said entity of the home network; and
- a unit (2D) for sending the generated service profile of the user to said entity of the home network; said service profile of the user generated for the entity of the home network being able to be distinct from a service profile of the user previously generated and sent by said entity for managing the profiles to a VMSC entity of the visited network depending on whether or not an intelligent network agreement exists between said visited network and said home network and, if such an agreement exists, on the nature of this agreement.

8. Profile management entity according to Claim 8, **characterized in that** it comprises a unit (2E) configured to detect a change in said service profile of the user stored in its said database.

9. Profile management entity according to Claim 7 or 8, **characterized in that** said unit (2A) for determining whether said third-party entity is in a visited network is configured to determine this on the basis of an international routing address of said third-party entity.

10. Computer program (PROG) comprising instructions for executing the steps of a method for managing user service profiles according to any one of Claims 1 to 6 when said program is executed by an HLR/HSS/SDM profile management entity.

11. Storage medium which can be read by an HLR/HSS/SDM profile management entity on which a computer program comprising instructions for executing the steps of the method for managing user service profiles according to any one of Claims 1 to 6 is stored.
